# EUROPEAN PATENT APPLICATION

(11) **EP 4 718 397 A1**
(43) Date of publication of application: **01.04.2026**
(21) Application number: 25203628.0
(22) Date of filing: 22.09.2025
(51) Int. Cl.: G06V 20/70, G06V 10/82, G06V 20/56

(54) **METHOD, APPARATUS, DEVICE AND PRODUCT FOR ANNOTATING IMAGES**

(30) Priority: 30.09.2024 CN 202411391024
(71) Applicant: Robert Bosch GmbH, 70442 Stuttgart (DE)
(72) Inventor: WANG, Wenfu, Shanghai, 200335 (CN); LI, Xinrun, Shanghai, 200335 (CN)

(57) **Abstract**

The present disclosure relates to a method, apparatus, device, and product for annotating images. The method comprises determining existing annotation information, where the existing annotation information comprises content annotated by a user for images in a first subset of an image set, the image set comprising a plurality of images in the same domain. The method further comprises generating, by a language model, corresponding semantic content based on the existing annotation information. The method further comprises annotating the images in a second subset of the image set based on the semantic content. In this way, the annotation information contained in the images in the image set that have been annotated by the user can be used to assist in the annotation task of the remaining images, thereby improving the efficiency and accuracy of annotation.

## Description

### Technical Field

The present disclosure relates to the field of image processing, and more particularly, to a method, apparatus, device, and product for annotating images.

### Background

Annotation tasks refer to the process of marking or annotating different types of data (such as image data, video data, speech data, etc.). Image annotation refers to marking objects or regions of interest in images so that machine learning algorithms can recognize and classify these objects. The images that need to be annotated are different within different technical fields. For example, in the field of autonomous driving, training data with rich semantic information may be constructed by annotating images of the environment surrounding the vehicle. This training data is critical to improving the perception, decision-making ability, and safety of autonomous driving systems.

### Summary of the Invention

Examples of the present disclosure propose a method, apparatus, device, and product for annotating images.

**In** a first aspect of the present disclosure, a method for annotating images is provided. The method comprises acquiring existing annotation information, where the existing annotation information comprises content annotated by a user for images in a first subset of an image set, the image set comprising a plurality images in the same domain. The method further comprises determining, by a language model, corresponding semantic content based on the existing annotation information. The method further comprises annotating the images in a second subset of the image set based on the semantic content.

In a second aspect of the present disclosure, an apparatus for annotating images is provided. The apparatus comprises an annotation information acquisition unit configured to acquire existing annotation information, where the existing annotation information comprises content annotated by a user for images in a first subset of an image set. The apparatus further comprises a semantic content generation unit configured to generate, by a language model, corresponding semantic content based on the existing annotation information; and the apparatus further comprises an annotation unit configured to annotate the images in a second subset of the image set based on the semantic content.

According to a third aspect of the present disclosure, an electronic device is provided. The electronic device comprises one or more processors; and a storage device for storing one or more programs, the one or more programs, when executed by the one or more processors, causing the one or more processors to implement the method provided according to the first aspect of the present disclosure.

In a fourth aspect of the present disclosure, a computer-readable storage medium is provided. The computer-readable storage medium has computer-executable instructions stored thereon, wherein the computer-executable instructions are executed by a processor to implement the method provided according to the first aspect of the present disclosure.

According to a fifth aspect of the present disclosure, a computer program product is provided, the computer program product being tangibly stored on a non-volatile computer-readable medium and comprising machine-executable instructions, the machine-executable instructions, when executed, causing the machine to execute the method according to the first aspect of the present disclosure.

It will be understood that the content described in the Summary of the Invention is not intended to limit key or important features of the examples of the present disclosure, nor is it intended to limit the scope of the present disclosure. Other features of the present disclosure will become readily understood by the following description.

### Brief Description of the Drawings

Above and other features, advantages and aspects of various examples of the present disclosure will become more apparent in combination with the accompanying drawings and with reference to the following detailed description. In the accompanying drawings, like or similar accompanying drawings designate like or similar elements, wherein:
FIG. 1 shows a schematic diagram of an example environment in which a plurality of examples of the present disclosure may be implemented;
FIG. 2 shows a flow chart of a method for annotating images according to some examples of the present disclosure;
FIG. 3 shows a schematic diagram of a process for annotating images according to some examples of the present disclosure;
FIG. 4 shows a schematic diagram of annotating images according to some examples of the present disclosure;
FIG. 5 shows a schematic diagram of an annotation result according to some examples of the present disclosure;
FIG. 6 shows a block diagram of an apparatus for annotating images according to some examples of the present disclosure; and
FIG. 7 shows a block diagram of an apparatus that can implement a plurality of examples of the present disclosure.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to". The term "based on" should be understood as "at least partially based on." The term "one example" or "this example" should be understood as "at least one example." The terms "first," "second," etc. may refer to different or the same object. Other explicit and implicit definitions may be included below.

As noted above, the annotation task can be completed manually or automatically through an annotation model. Before the image or other data is labeled using the annotation model, the annotation model needs to be trained. However, the training process is relatively complicated and the trained model has low robustness. To this end, the data can be labeled using a basic annotation model obtained through large-scale data training. The basic annotation model can receive multimodal data as input and achieve pixel-level prediction to complete accurate annotation. However, although the basic annotation model has strong generalization capabilities, when faced with data in a specific domain, the semantics of the specific domain deviate from the semantics of the training data (the data used to train the basic model), causing the basic model to produce lower-quality annotations.

To this end, examples of the present disclosure provide a method for annotating images. The method comprises using the existing annotation content of some images in the same domain to assist in the annotation tasks of other images in the domain. For example, a language model may be used to generate semantic content for existing annotation content, which may be used as reference information to automatically annotate other images in the domain. In this way, the user's annotation information for image datasets in specific domains is introduced and combined with the semantic content generated by the language model to more accurately understand and capture the semantic features of the domain corresponding to the image when the image is annotated, thereby improving the accuracy and reliability of the annotation.

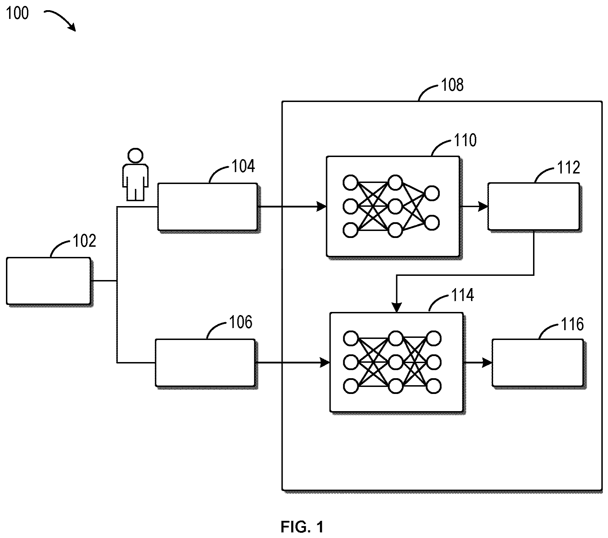

FIG. 1 shows a schematic diagram of an example environment 100 in which a plurality of examples of the present disclosure may be implemented. As shown in FIG. 1, the environment 100 comprises an image set 102 and an electronic device 108 for annotating images. The electronic device 108 may be any electronic device capable of performing the method according to the present disclosure, e.g., the electronic device 108 may be an electronic device capable of running a trained neural network model to perform the method according to the present disclosure. For example, the electronic device 108 may be a user terminal, a mobile device, a computer, an in-vehicle terminal, etc., or may be a computing system, a single server, a distributed server, or a cloud-based server. The electronic device 108 may be provided with a language model 110 and an annotation model 114. The annotation model 114 may be a basic annotation model trained using large-scale training data. The language model 110 may comprise a variety of types, such as statistical language models, neural network language models (e.g., convolutional neural networks, recursive neural networks), etc. In some examples, the language model 110 may be a pre-trained language model, such as a GPT model, a BERT model, etc.

It can be understood that the method for annotating images provided by the examples of the present disclosure can be applied to a variety of domains and application scenarios, e.g., it can be applied to the domains of autonomous driving, medical image analysis, remote sensing image analysis, security monitoring, industrial automation, etc.

According to examples of the present disclosure, in an example environment 100, the image set 102 may be acquired in real time by an image acquisition device or may also be acquired from an open source training dataset. For example, when the method for annotating images provided by examples of the present disclosure is applied to the domain of autonomous driving, the image set 102 may be acquired by sensors deployed on a vehicle. Sensors may include but are not limited to vision sensors (also known as optical cameras or video cameras), millimeter wave radars, lidars, global positioning systems, ultrasonic sensors, inertial measurement units, and other sensors. Sensors deployed on a vehicle may capture a plurality of images of the vehicle's interior or exterior environment. It can be understood that the plurality of images may be images of the same scenario or the same domain (for example, the plurality of images belong to the domain of autonomous driving) and the image set 102 may be constructed based on the plurality of images.

In some examples of the present disclosure, in order to assist the basic annotation model 114 in more accurately annotating images in the image set 102, a user may annotate some of the images in the image set 102 (e.g., the image collection 104 in the image set 102). For example, the user may annotate the first n images in the image set 102 to determine the existing annotation content. That is, the image collection 104 comprises a plurality of images and existing annotation content corresponding to the plurality of images. The existing annotation content may comprise the locations and categories of objects contained in the images that have been annotated by the user. The plurality of images in the set of image collection 104 and the existing annotation information contained in the plurality of images may be input into the language model 110.

It can be understood that in order to enable the annotation model 114 to better understand the annotation task and achieve higher annotation accuracy, the semantics within a specific domain (such as the semantics contained in existing annotation content) can be aligned with the semantics that can be understood by the basic model. For example, the language model 110 may generate semantic content 112 corresponding to existing annotation information. The language model 110 is used to perform semantic interpretation or semantic extension on the existing annotation information to generate corresponding semantic content 112. In one example, the existing annotation information may comprise "human.pedestrian.roller." The semantic content generated by the language model 110 may be "A stroller is a lightweight vehicle designed for convenient transportation of infants and young children. Stroller refers to an individual pushing a stroller or baby carriage, typically used to transport infants or young children, and strollers generally have four small wheels to facilitate pushing and operation by parents or caregivers."

In some examples of the present disclosure, the semantic content 112 determined by the language model 110 may be input into the annotation model 114 to assist the annotation model 114 in its annotation tasks (e.g., assisting the annotation model 114 in its annotation tasks for the image collection 106 in the image set). It can be understood that the semantic content 112 is natural semantic content that can be understood by the annotation model 114, e.g., it can be semantic content consisting of natural semantic character strings. That is, the semantic content 112 can help the annotation model 114 better understand the annotation task, eliminating semantic deviations for the annotation model 114. The annotation model 114 may determine the annotation content 116 by annotating images in the input image collection 106 (e.g., images in the image set 102 that have not been annotated by the user) based on the semantic content. For example, the annotation model 114 may comprise a detection model and a segmentation model. The detection model is used to annotate objects and their categories in the image using a two-dimensional annotation box. The segmentation model is used to perform semantic segmentation or instance segmentation on the image, determining the category corresponding to each pixel in the image and the semantic mask composed of a plurality of pixels of the same category. The annotation content 116 may comprise a two-dimensional annotation box for an object in the image, a category label of the object, a category label of a pixel, etc.

It can be understood that the manner of annotating images provided by the examples of the present disclosure may also be used to annotate point cloud data or other data. For example, the annotation information of some point clouds in the three-dimensional point cloud data can be used to assist in the annotation task of the remaining point cloud data in the three-dimensional point cloud data, thereby improving the annotation efficiency and accuracy of the three-dimensional point cloud data.

In this way, the user's annotation information for image datasets in specific fields is introduced, and combined with the semantic content extracted by the pre-trained language model, the annotation model can more accurately understand and capture the semantic features of specific domains, thereby improving the annotation accuracy of the basic annotation model on data in specific domains, further enhancing the model's generalization ability on data in specific domains, and making it better adapted to application scenarios in different domains.

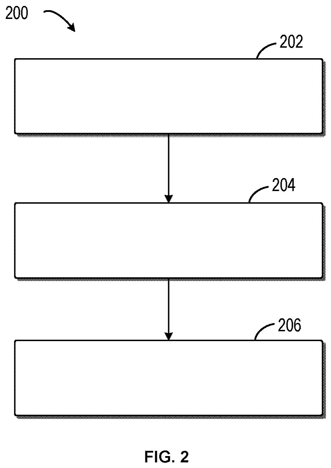

The process according to examples of the present disclosure will be described in detail below in conjunction with FIG. 2 to FIG. 7. For ease of understanding, the specific data mentioned in the following description are exemplary and are not used for defining the scope of protection of the present disclosure. It will be understood that the examples described below may also comprise additional actions not shown and/or actions that may be omitted as shown, the scope of the present disclosure being not limited in this regard.

FIG. 2 shows a flow chart of a method 200 for annotating images according to some examples of the present disclosure. The method 200 may be performed by the electronic device 108 of FIG. 1. As shown in FIG. 2, in block 202, the method 200 comprises obtaining existing annotation information, which comprises content annotated by a user for images in a first subset (e.g., the images in the image collection 104) of an image set (e.g., the image set 102 shown in FIG. 1), where the image set comprises a plurality of images in the same domain (e.g., a plurality of images in the domain of autonomous driving). An image set may comprise a plurality of images of the same scenario or within the same domain. It can be understood that the images in the first subset refer to images that have been annotated by the user. In one example, the image set may comprise 1000 images and the first subset may comprise the first 300 images annotated by the user.

In some examples of the present disclosure, the image set may comprises a plurality of images acquired at a preset frame rate by a sensor of the vehicle. The content annotated by the user may comprise a bounding box of an object in the image (e.g., a two-dimensional bounding box or a three-dimensional bounding box), a category label of the object, a category of a pixel, etc. For example, the user can use rectangular boxes to annotate objects contained in an image and add category labels to the rectangular boxes. Category labels refer to the category to which the object in the image belongs. The category labels in different domains vary. For example, in the domain of autonomous driving, category labels may comprise "pedestrian," "vehicle," "lane line," "traffic sign," etc.

In block 204, the method 200 comprises generating, by a language model (e.g., the language model 110 shown in FIG. 1), corresponding semantic content based on the existing annotation information. The language model refers to an artificial intelligence model trained on a large-scale corpus. These models can understand and generate natural language text and demonstrate excellent performance in a variety of natural language processing tasks. For example, tasks may include but are not limited to text classification, named entity recognition, sentiment analysis, machine translation, etc. In some examples of the present disclosure, pre-training may be conducted on large-scale text data to enable the language model to learn universal language representation. After pre-training is completed, fine-tuning can be performed to adapt to specific tasks or domains.

It can be understood that objects in images within a specific domain vary, so the category labels contained in the existing annotation information vary. However, category labels within specific domains also have different meanings (e.g., different domains have their own unique terms, concepts, or expressions), which generally cannot be understood by a basic annotation model. **In** order to be able to use the basic annotation model to complete annotation tasks without a specially trained annotation model, these domain-specific semantics can be matched with the general semantics in the network and converted, eliminating the semantic gap between specific domains and general domains so that the basic annotation model can understand the annotation task and complete the annotation task accurately and efficiently. For example, a language model can be used to interpret and extend the content of existing annotation information to obtain natural semantics that can be understood by the annotation model, making the annotation results of the annotation model for images more consistent and reliable. The annotation model can be an existing basic annotation model obtained by training with large-scale network data that does not have strong generalization capabilities for a specific domain.

In block 206, the method 200 comprises annotating images in a second subset of the image set (e.g., the image collection 106 shown in FIG. 1) based on semantic content. For example, the remaining images in the image set can be annotated using a basic open source annotation model. For example, a bounding box (BBox) is used to annotate the objects in the image and add the category label to which the object belongs. In some examples of the present disclosure, the annotation model may also perform instance segmentation or semantic segmentation on the input image, determine the category to which each pixel in the image belongs, and determine the semantic mask corresponding to each object in the image. In some examples of the present disclosure, the annotation model may determine, based on semantic content, a region or object in an image that corresponds to the semantic content. It can be understood that the annotation content corresponding to the annotated image may comprise the annotation box corresponding to the object in the image and the category, and may also comprise the category of each pixel in the image and the semantic box composed of pixels of the same category.

In this way, the language model interprets the existing annotation information, thereby aligning the semantics in different domains with the network semantics so that the annotation model can better understand the image content, improving the efficiency and accuracy of data annotation and better meeting the needs of annotation tasks in different domains.

In some examples of the present disclosure, the category labels may be hierarchical category labels. For example, the "vehicle" level can be subdivided into "sedans," "trucks," "buses," etc., and the "sedans" level can be further subdivided into "large sedans," "mid-size sedans," "electric vehicles," etc. It can be understood that the levels can be set by the annotator. When setting the levels, they should be reasonably divided according to the complexity of the task and the diversity of the objects to ensure that subsequent annotation tasks can effectively identify and understand the objects in the image.

In some examples of the present disclosure, the annotation model may be a basic annotation model trained using general training data. For example, the annotation model may be an annotation model based on deep learning. The annotation model (e.g., the annotation model 114 shown in FIG. 1) may determine, based on input semantic content, a region or object in the image that corresponds to the semantic content. The annotation model may use a two-dimensional annotation box to annotate the region or object corresponding to the semantic content and use the segmentation model to perform semantic segmentation on the image to determine the category to which each pixel in the image belongs. In one example, the annotation model may comprise a GroundingDINO model and a semantic segmentation model (e.g., a Segment Anything Model (SAM)). The GroundingDINO model can determine matching image features from an image based on semantic content and the SAM model can determine the region or object corresponding to the image feature from the input image. For example, the GroundingDINO model can recognize the input image and annotate the objects contained in the image with rectangular boxes.

In some examples of the present disclosure, as the annotation model is an open source basic annotation model, it is usually trained using a general non-domain-specific dataset and may not be able to directly understand the semantics within a specific domain (e.g., it cannot understand the terms and definitions within a specific domain). For example, the annotation model is unclear about and cannot understand the semantics of the label "human.pedestrian.stroller" in the field of autonomous driving. It is inaccurate to directly annotate images in the image set using the annotation model. Therefore, the labeling system established based on the user's annotation information can be semantically interpreted so that the specific semantic content can be understood by the annotation model and aligned with the semantics that the annotation model can understand.

In some examples of the present disclosure, a language model may be utilized to perform semantic interpretation on existing annotation information. For example, the category labels contained in the existing annotation information (e.g., "pedestrian", "vehicle", "building", "traffic light", etc.) can be input into the pre-trained language model and the pre-trained language model can generate a natural language description related to the category label. The natural language description associated with the category label may be a synonym, near synonym, or extension of the category label or a more detailed, more comprehensible explanation of the category label. Synonyms may be other terms that have a similar meaning to the category. For example, synonyms for "car" may comprise "four-wheel drive vehicle," "sedan," "electric car," etc. Extensions are broader or more specific concepts that may be related to a category label. For example, for the category label "pedestrian," the extensions may comprise "walker," "person crossing the road," "person waiting for the traffic light," etc. These extensions can provide more specific contextual information and help the annotation model understand the specific scenario in the image.

In this way, the semantics within a particular domain can be aligned with the semantics that are understandable by the basic open source annotation model so that the annotation results of the annotation model are more accurate while better meeting annotation needs in different domains.

In some examples of the present disclosure, in order to further improve the accuracy of the annotation results, a plurality of images from the image set may be input into a language model or other pre-trained model such that the model outputs natural language for describing the image features of the image. In some examples, image features of the image may be extracted by means of image recognition, etc. and converted into natural language descriptions. For example, for an image containing a pedestrian and a car, the natural language description of the image features may comprise "there is a pedestrian and a car in the image." It can be understood that the natural language and semantic content used to characterize the features of the image can serve as auxiliary information to assist the annotation model in completing the annotation task.

In some examples of the present disclosure, other input information may also be used to assist the annotation model in the annotation task. The input information may be three-dimensional point cloud data corresponding to the image or a three-dimensional bounding box of an object in the image in the three-dimensional point cloud data. The three-dimensional bounding box can be projected to obtain a corresponding two-dimensional box. For example, a three-dimensional bounding box can be projected into the camera coordinate system, corner points (e.g., 8 corner points) of the three-dimensional bounding box can be projected onto the image plane, and a plurality of corner points can be selected to obtain a two-dimensional box (e.g., the 4 largest corner points can be selected to obtain a two-dimensional box). It can be understood that the two-dimensional box is a rough two-dimensional box and may be larger than the actual size of the object in the image or smaller than the actual size of the object in the image. Most of the area of the object in the image can be located within the two-dimensional box.

In some examples of the present disclosure, an image, semantic content, and a two-dimensional box may be input into an annotation model and the annotation model may annotate the image according to the semantic content and the two-dimensional box. The two-dimensional box can assist the annotation model in its annotation work and provide the annotation model with rough location information that can roughly represent the object in the image. For example, the annotation model may refine or correct the rough two-dimensional box based on the semantic content to obtain the final two-dimensional annotation box. In one example, the GroundingDINO model can recognize the input image basic on the semantic content and annotate the objects contained in the image with rectangular boxes to obtain corresponding two-dimensional candidate annotation boxes. The two-dimensional box is refined or trimmed based on the two-dimensional candidate annotation boxes to obtain the final two-dimensional annotation box.

In some examples of the present disclosure, three-dimensional point cloud data may be further combined to determine a more accurate annotation result. For example, the three-dimensional point cloud data may be projected onto an image plane to obtain corresponding two-dimensional point cloud data. Alternatively, points within a three-dimensional bounding box may be extracted from the three-dimensional point cloud data and projected onto the image plane to obtain two-dimensional points in the image. It can be understood that the two-dimensional points and the two-dimensional boxes can be used to assist the annotation model in annotating the input image to obtain the corresponding two-dimensional annotation box. In other examples of the present disclosure, the three-dimensional point cloud data contained in the three-dimensional bounding box may be sampled to obtain a preset number of three-dimensional points (e.g., 3-5 points). In some examples of the present disclosure, sampling can be by random sampling, farthest point sampling (FPS), or other sampling methods.

In some examples of the present disclosure, a preset number of three-dimensional points may be projected onto an image plane to obtain a preset number of two-dimensional points. The preset number of two-dimensional points are pixel points corresponding to the objects in the image and can be used as annotation points. It can be understood that based on the annotation points and the two-dimensional annotation box, the semantic segmentation model in the annotation model can be used to perform semantic segmentation on the image to determine the category corresponding to each pixel in the image and the semantic mask composed of a plurality of pixels of the same category.

In some examples of the present disclosure, in order to ensure that the output annotation results are more accurate, after annotating the input image, quality assessment may be performed on the annotation content obtained to determine the annotation quality corresponding to the annotation content. The annotation quality may be a specific quality score (e.g., a score in the 0-100 range) or may be a quality level (e.g., high quality, low quality, etc.). It can be understood that the annotation content comprises two aspects. One is geometric content (such as the size and geometric features of the annotation box) and the other is semantic content (such as the category of the object, the category of the pixel, or the semantic box or semantic mask of the object). Based on this, the annotation quality of the annotation content may be determined from two aspects, semantic quality assessment and geometric quality assessment. For example, the semantic quality score may be determined based on semantic features and the geometric quality score may be determined based on geometric features. The annotation quality score may be the sum of the two values, the weighted sum of the two values, or the weighted average of the two values.

In some examples of the present disclosure, the annotation quality may be determined based on the difference between the size of the annotation box and the typical size of the object. If the size of the annotation box is significantly different from the typical size of the object or the aspect ratio of the annotation box is significantly different from the preset aspect ratio, it is determined that the annotation box is not accurate and the annotation quality is low. For example, in one example, the typical length of a small car is generally 3.8 m-5 m and the width is generally 1.5 m-2 m. If the length of the annotation box exceeds 10 m, this means that the annotation box is not accurate and the annotation quality is low. The annotation intelligence quality score can be 30 points (far lower than the preset score threshold of 80 points).

In other examples of the present disclosure, the annotation quality may also be determined based on the geometric continuity of the semantic mask of the object. For example, where the semantic mask of the vehicle contains a plurality of holes that are not continuous, it can be determined that the semantic segmentation result is inaccurate and the annotation quality is low. Alternatively, where the edges of the semantic mask are incomplete or have unreasonable overlaps with other semantic masks, it can be determined that the annotation quality is not high. In one example, of the pixels in the same region, most of the pixels are categorized as vehicle, while a small number of pixels are categorized as sky. This indicates that the segmentation results of these small number of pixels are inaccurate.

In some examples of the present disclosure, a corresponding semantic similarity can also be determined using a semantic similarity model (e.g., a model that incorporates visual and textual information) after the image is segmented with a segmentation model. A high semantic similarity indicates that the semantic information of the semantic mask is correct; a low semantic similarity indicates that the semantic segmentation model has incorrect segmentation results. For example, a semantic similarity model may receive a semantic mask (or a region with a mask superimposed on the input image) and one or more possible labels (or descriptive text) and then output a score representing the semantic similarity between the semantic mask and the given label. It can be understood that when the semantic similarity is less than the preset similarity threshold, it can be determined that the annotation quality is low; when the semantic similarity is greater than the preset similarity threshold, it can be determined that the annotation quality is high.

In some examples of the present disclosure, if the annotation quality does not meet the preset requirements (e.g., the annotation quality score is lower than a preset score threshold), the annotation work is performed again (e.g., the semantic content corresponding to the existing annotation information is re-determined, the two-dimensional box corresponding to the three-dimensional bounding box is re-determined, the annotation model is re-used to annotate the image, etc.). If the quality of the re-annotated annotation meets the preset requirements, the corresponding annotation result is output. If the quality of the re-annotation does not meet the preset requirements, the annotation work will be redone until the number of re-annotations exceeds the preset threshold. If the number of re-annotations exceeds the preset threshold and the determined annotation quality still does not meet the preset requirement, the image annotation work is abandoned.

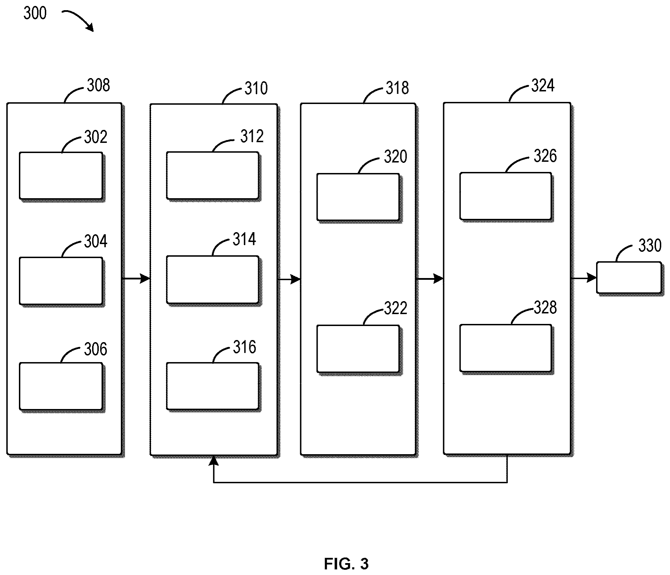

FIG. 3 shows a schematic diagram of a process for annotating images according to some examples of the present disclosure. As shown in FIG. 3, the example environment 300 comprises input information 308, a prompt processing module 310, an annotation module 318, and an annotation quality determination module 324. It can be understood that the prompt processing module 310 may comprise a plurality of pre-trained models, such as a pre-trained language model etc.

In some examples of the present disclosure, the input information 308 comprises a plurality of types of inputs, such as other inputs 302 (e.g., three-dimensional point cloud data, three-dimensional bounding box, etc.), a text prompt 304, and an input image 306. It can be understood that the three-dimensional point cloud data is point cloud data associated with the input image 306. For example, the three-dimensional point cloud data and image 306 are acquired for the same scenario over the same time period. The three-dimensional bounding box may be a three-dimensional bounding box corresponding to an object contained in the image 306. In some examples of the present disclosure, the text prompt 304 may be content that a user has annotated for a portion of images in an image collection and may comprise, e.g., an annotated category label.

As shown in FIG. 3, the prompt processing module 310 may comprises a plurality of processing modules, such as a semantic prompt word processing module 312, a bounding box prompt word processing module 314, and a point prompt word processing module 316. The semantic prompt processing module 312 may utilize a pre-trained language model to perform semantic interpretation and semantic extension on the text prompt 304 to generate corresponding semantic content (not shown in the figure). The bounding box prompt word processing module 314 may project the three-dimensional bounding box to determine a corresponding two-dimensional box (not shown in the figure). The point prompt word processing module 316 may project the three-dimensional point cloud data to determine corresponding two-dimensional points (not shown in the figure).

In some examples of the present disclosure, two-dimensional points, two-dimensional boxes, and semantic content can all be used as auxiliary reference information for annotating images using an annotation model. It can be understood that all three can be input into the annotation module 318 as reference information for annotation by the annotation model, or some of the information can be input into the annotation module 318. In one example of the present disclosure, a two-dimensional box may be entered into the annotation module 318, and the annotation module 318 annotates the input image 306 according to the two-dimensional box to obtain an annotation result.

In some examples of the present disclosure, the annotation module 318 may comprise a detection model 320 and a segmentation model 322. The detection model 320 (e.g., a GroundingDINO model) may annotate objects in the image 306 using two-dimensional annotation boxes and assign category labels to the two-dimensional annotation boxes. The segmentation model 322 may perform instance segmentation or semantic segmentation on the image 306 according to the two-dimensional box or the two-dimensional annotation box and determine the category corresponding to each pixel in the image. According to the segmentation result, a plurality of semantic masks corresponding to a plurality of objects in the image 306 may be determined.

It can be understood that the annotation result may be input to the annotation quality determination module 324, and the annotation quality determination module 324 determines the annotation quality of the annotation result. The annotation quality determination module 324 may comprise a geometric quality determination module 326 and a semantic quality determination module 328. The geometric quality determination module 326 may determine the geometric quality according to the geometric features of the two-dimensional annotation box or the geometric features of the semantic mask. The semantic quality determination module 328 may determine the semantic quality according to the semantic features of the two-dimensional annotation box or the semantic features of the semantic mask. Based on the geometric quality and the semantic quality, the annotation quality corresponding to the annotation result can be determined. In response to the annotation quality not meeting the preset requirement, the input information may be reprocessed and the annotation work of the image 306 may be performed again. The annotation quality may be determined based on the semantic segmentation results and object detection results contained in the annotation content. Semantic segmentation results may comprise pixel category labels, semantic similarity, and semantic masks. Object detection results may comprise the location and category of the object. It can be understood that if the annotation quality after re-annotation meets the preset requirement, the annotation content 330 is output; if the annotation quality after a plurality of re-annotations still does not meet the preset requirement, the annotation work of the image 306 is abandoned.

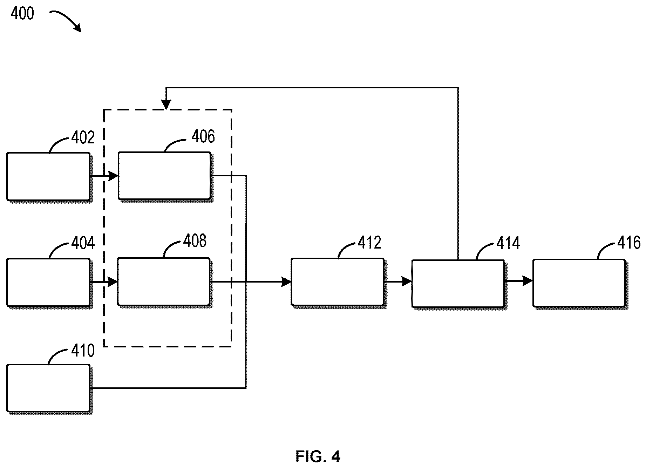

FIG. 4 shows a schematic diagram of annotating images according to some examples of the present disclosure. As shown in FIG. 4, the existing annotation information 402 may be input into a pre-trained language model 406 and the pre-trained language model 406 may determine the corresponding semantic content. The three-dimensional bounding box 404 may be input to a point cloud processor 408, which may determine a two-dimensional box corresponding to the three-dimensional bounding box. The semantic content, the two-dimensional box, and the image 410 may be input into the annotation model 412. The annotation model 412 may annotate the input image 410 according to the semantic content and the two-dimensional box and determine the corresponding annotation content. For example, the annotation model 412 may use a two-dimensional annotation box to annotate an object in an image and determine a category label for the object. The annotation model 412 may also perform semantic segmentation on the image and determine the corresponding semantic segmentation result.

In some examples of the present disclosure, the annotation content may be input into the annotation quality assessment module 414, and the annotation quality assessment module 414 determines the corresponding annotation quality. For example, the annotation quality assessment module 414 may determine the corresponding annotation quality 416 according to the geometric features of the annotation box and the semantic segmentation result. If the annotation quality 416 does not meet the requirements, it returns to re-annotation. For example, the pre-trained language model 406 performs semantic interpretation and semantic extension on the existing annotation information 402 to determine new semantic content. If the annotation quality after re-annotation still does not meet the requirement, it can return to re-annotation again. If the number of re-annotations is greater than the annotation threshold and the annotation quality still does not meet the requirement, the image annotation work will be abandoned. It should be noted that the above examples only show one annotation process as an example. In other examples, other annotation processes may be used, and the input information used in other annotation processes may be the same or different.

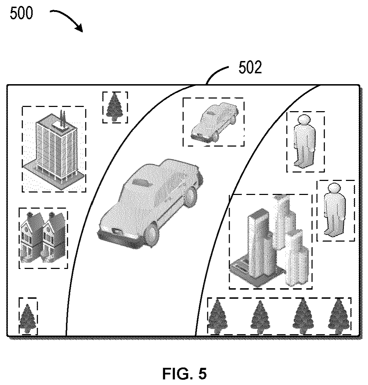

FIG. 5 shows a schematic diagram of an annotation result according to some examples of the present disclosure. As shown in FIG. 5, the annotation result of the image 502 may comprise an annotation box (dashed box) for the object in the image 502 and a category label of the object. For example, objects in the image 502 may comprise "pedestrians," "buildings," "trees," and "vehicles." After the objects in the image 502 are annotated with an annotation box, a category label may be added to the annotation box. For example, the category label of the vehicle's annotation box may be "car" and the category label of the pedestrian's annotation box may be "people."

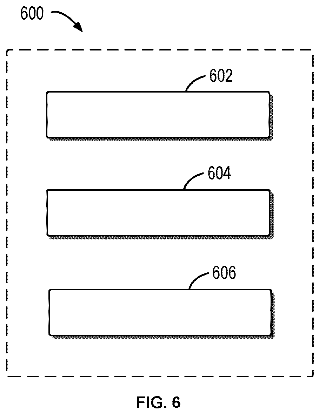

FIG. 6 shows a block diagram of an apparatus 600 for annotating images according to some examples of the present disclosure. As shown in FIG. 6, the apparatus 600 comprises an annotation information acquisition unit 602 configured to acquire existing annotation information, where the existing annotation information comprises content annotated by a user for images in a first subset of an image set. The apparatus 600 further comprises a semantic content generation unit 604 configured to generate, by a language model, corresponding semantic content based on the existing annotation information; and the apparatus 600 further comprises an annotation unit 606 configured to annotate the images in a second subset of the image set based on the semantic content.

In some examples, the semantic content generation unit 604 is further configured to: acquire a plurality of category labels included in the existing annotation information; determine, by a language model, content for interpreting the plurality of category labels; and generate the semantic content based on the content for interpreting the plurality of category labels and the natural language used to describe image features corresponding to the images in the second subset.

In some examples, the semantic content generation unit 604 is further configured to: generate content for interpreting the plurality of category labels based on a plurality of synonyms and a plurality of extensions of the plurality of category labels.

In some examples, the annotation unit 606 is further configured to: determine, based on a three-dimensional bounding box corresponding to an object contained in an image in the second subset, a two-dimensional box corresponding to the projected three-dimensional bounding box, the three-dimensional bounding box being a bounding box in the three-dimensional point cloud data corresponding to the image in the second subset; and annotate the images in a second subset of the image set based on the semantic content and the two-dimensional box.

In some examples, the annotation unit 606 is further configured to: determine a plurality of two-dimensional position information corresponding to a plurality of corner points of the three-dimensional bounding box by projecting the three-dimensional bounding box onto an image plane; determine a plurality of target corner points based on a plurality of two-dimensional position information corresponding to the plurality of corner points; and determine a two-dimensional box corresponding to the three-dimensional bounding box based on the plurality of target corner points.

In some examples, the annotation unit 606 is further configured to: determine, based on the semantic content, two-dimensional candidate annotation boxes for objects contained in the images of the second subset; and determine two-dimensional annotation boxes for the objects based on the two-dimensional candidate annotation boxes and the two-dimensional box.

In some examples, the annotation unit 606 is further configured to: determine three-dimensional target point cloud data by sampling the three-dimensional point cloud data contained in the three-dimensional bounding box; and determine the two-dimensional pixel points corresponding to the object by projecting the three-dimensional target point cloud data onto an image plane.

In some examples, the annotation content of the image comprises a segmentation result corresponding to the image, and the apparatus 600 further comprises an annotation quality score determination unit configured to: determine a semantic box for the object based on the segmentation result; and determine an annotation quality score of the annotation content based on the geometric features and semantic features of the semantic box and the two-dimensional annotation box.

In some examples, the geometric features comprise whether the semantic box is continuous and the size of the two-dimensional annotation box, and the annotation quality score determination unit is further configured to: determine a first annotation quality score of the annotation content based on whether the semantic boxes are continuous and whether the size of the two-dimensional annotation box matches the preset size of the object.

In some examples, the annotation quality score determination unit is further configured to: determine a second annotation quality score of the annotation content according to the similarity between the semantic features and the semantic content.

In some examples, the annotation quality score determination unit is further configured to: determine an annotation quality score of the annotation content based on the first annotation quality score and the second annotation quality score.

In some examples, the apparatus 600 further comprises an annotation quality score determination unit configured to: in response to the annotation quality score being less than a preset quality score threshold, re-annotate the image and determine the annotation quality score after re-annotation until the number of re-annotations is greater than a preset number threshold.

It should be understood that by utilizing the apparatus 600 of the present disclosure, at least one of a number of advantages that are capable of being implemented by the method or process as described above can be implemented. For example, the apparatus 600 can measure the quality and accuracy of annotations.

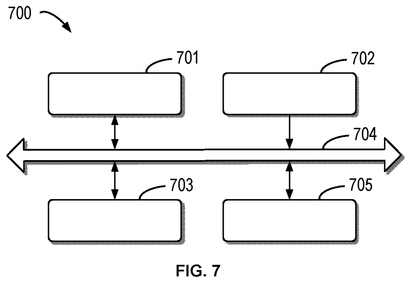

FIG. 7 shows a schematic block diagram of an example apparatus 700 that can be used to implement examples of the present disclosure. As shown in FIG. 7, the appliance 700 comprises a processor 701, which can perform various appropriate actions and processes according to computer program instructions stored in a read only memory (ROM) 702 and loaded into a random access memory (RAM) 703. Various programs and data required for the operation of the device 700 may also be stored in the RAM 703. The processor 701, the ROM 702, and the RAM 703 are interconnected through a bus 704. An input/output (I/O) interface 705 is also connected to the bus 704.

The various processes and processing described above, such as the method 200, may be executed by the processor 701. For example, in some examples, the method 200 can be implemented as a computer software program tangibly contained in a machine-readable medium. In some examples, a part or all of the computer programs may be loaded and/or installed onto the apparatus 700 via the ROM 702. When the computer program is loaded onto the RAM 703 and executed by the processor 701, one or more actions of the method 200 described above may be performed.

The present disclosure may be a method, device, system, and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: random access memory (RAM), read-only memory (ROM), erasable programmable read-only memory (EPROM or flash memory), static random access memory (SRAM), and any suitable combination of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers, or the processing units of other programmable data processing apparatuses, thereby producing a type of machine, such that when these instructions are executed by the computers or processing units of other programmable data processing apparatuses, an apparatus that realizes the functions/actions stipulated in one or more boxes in the flow charts and/or block diagrams is produced. These computer-readable program instructions may also be stored in computer-readable storage medium, enabling computers, programmable data processing apparatuses, and/or other devices to operate in a specific manner. Therefore, the computer-readable media containing instructions comprise a manufactured product that comprises instructions for implementing various aspects of the functions/actions specified in one or more boxes in the flow charts and/or block diagrams.

The computer-readable program instructions may also be loaded onto a computer, other programmable data processing apparatuses, or other devices, enabling a series of operational steps to be executed on the computer, other programmable data processing apparatuses, or other devices to generate a computer-implemented process. This enables the instructions executed on the computer, other programmable data processing apparatuses, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used herein aims to best explain the principles and actual applications of various examples as well as the technological improvements in the technology in the market, or allow others of ordinary skill in the art to understand various examples disclosed herein.

## Claims

1. A method (200) for annotating images, comprising:
acquiring (202) existing annotation information, where the existing annotation information comprises content annotated by a user for images in a first subset of an image set, the image set comprising a plurality of images in the same domain;
generating (204), by a language model, corresponding semantic content based on the existing annotation information; and
annotating (206) the images in a second subset of the image set based on the semantic content.

2. The method (200) according to Claim 1, wherein generating (204), by a language model, corresponding semantic content comprises:
acquiring a plurality of category labels included in the existing annotation information;
generating, by the language model, content for interpreting the plurality of category labels; and
generating the semantic content based on the content for interpreting the plurality of category labels and the natural language used to describe image features corresponding to the images in the second subset.

3. The method (200) according to Claim 2, wherein generating content for interpreting the plurality of category labels comprises:
generating content for interpreting the plurality of category labels based on a plurality of synonyms and/or a plurality of extensions of the plurality of category labels.

4. The method (200) according to Claim 1, wherein annotating (206) the images in a second subset of the image set comprises:
determining, based on a three-dimensional bounding box corresponding to an object contained in an image in the second subset, a two-dimensional box corresponding to the projected three-dimensional bounding box, the three-dimensional bounding box being a bounding box in the three-dimensional point cloud data corresponding to the image in the second subset; and
annotating the images in a second subset of the image set based on the semantic content and the two-dimensional box.

5. The method (200) according to Claim 4, wherein determining the two-dimensional box corresponding to the projected three-dimensional bounding box comprises:
determining a plurality of two-dimensional position information corresponding to a plurality of corner points of the three-dimensional bounding box by projecting the three-dimensional bounding box onto an image plane;
determining a plurality of target corner points based on a plurality of two-dimensional position information corresponding to the plurality of corner points; and
determining a two-dimensional box corresponding to the three-dimensional bounding box based on the plurality of target corner points.

6. The method (200) according to Claim 4, wherein annotating (206) the images in a second subset of the image set comprises:
determining, based on the semantic content, two-dimensional candidate annotation boxes for objects contained in the images of the second subset; and
determining two-dimensional annotation boxes for the objects based on the two-dimensional candidate annotation boxes and the two-dimensional box.

7. The method (200) according to Claim 6, wherein annotating (206) the images in a second subset of the image set further comprises:
determining three-dimensional target point cloud data by sampling the three-dimensional point cloud data contained in the three-dimensional bounding box; and
determining the two-dimensional pixel points corresponding to the object by projecting the three-dimensional target point cloud data onto an image plane.

8. The method (200) according to Claim 6, wherein the annotation content of the images in the second subset comprises the segmentation results corresponding to the images, and the method (200) further comprises:
determining a semantic box for the object based on the segmentation result; and
determining an annotation quality score of the annotation content based on the geometric features and semantic features corresponding to the semantic box and the two-dimensional annotation box.

9. The method (200) according to Claim 8, wherein the geometric features comprise whether the semantic box is continuous and the size of the two-dimensional annotation box, and determining the annotation quality score of the annotation content comprises:
determining a first annotation quality score of the annotation content based on whether the semantic boxes are continuous and whether the size of the two-dimensional annotation box matches the preset size of the object.

10. The method (200) according to Claim 9, wherein determining the annotation quality score of the annotation content comprises:
determining a second annotation quality score of the annotation content according to the similarity between the semantic features and the semantic content.

11. The method (200) according to Claim 10, wherein determining the annotation quality score of the annotation content comprises:
determining an annotation quality score of the annotation content based on the first annotation quality score and the second annotation quality score.

12. The method (200) according to Claim 8, further comprising:
in response to the annotation quality score being less than a preset quality score threshold, re-annotating the image and determining the annotation quality score after re-annotation until the number of re-annotations is greater than a preset number threshold.

13. An apparatus (600) for generating an image, comprising:
an annotation information acquisition unit (602) configured to acquire existing annotation information, where the existing annotation information comprises content annotated by a user for images in a first subset of an image set, the image set comprising a plurality images in the same domain;
a semantic content generation unit (604) configured to generate, by a language model, corresponding semantic content based on the existing annotation information; and
an annotation unit (606) configured to annotate the images in a second subset of the image set based on the semantic content.

14. An electronic device (700), comprising:
at least one processor (701); and
a memory (702) coupled to the at least one processor (701) and having instructions stored thereon, the instructions, when executed by the at least one processor (701), causing the device (700) to perform the method according to any one of Claims 1-12.

15. A computer program product, the computer program product being tangibly stored on a non-volatile computer-readable medium and comprising machine-executable instructions, the machine-executable instructions, when executed, causing a machine to execute steps of the method according to any one of Claims 1-12.
